(19) Europäisches Patentamt

European Patent Office

Office européen des brevets

(11) **EP 0 697 704 B1**

(12) **EUROPÄISCHE PATENTSCHRIFT**

(45) Veröffentlichungstag und Bekanntmachung des Hinweises auf die Patenterteilung:
**15.11.2000 Patentblatt 2000/46**

(51) Int. Cl.[7]: **H01F 38/40**, H02H 3/33

(21) Anmeldenummer: **95112217.5**

(22) Anmeldetag: **03.08.1995**

(54) **Fehlerstromschutzschalter mit Energiespeicherschaltung**

Ground fault circuit interrupter with energy storing circuit

Disjoncteur de protection avec circuit de stockage d'énergie

(84) Benannte Vertragsstaaten:
**AT CH DE ES FR GB IT LI**

(30) Priorität: **16.08.1994 DE 4429007**

(43) Veröffentlichungstag der Anmeldung:
**21.02.1996 Patentblatt 1996/08**

(73) Patentinhaber:
**SIEMENS AKTIENGESELLSCHAFT**
**80333 München (DE)**

(72) Erfinder:
**Bauer, Bernhard, Dipl.-Ing.**
**D-93053 Regensburg (DE)**

(56) Entgegenhaltungen:
**EP-A- 0 002 225**     **EP-A- 0 084 814**
**DE-B- 2 540 815**

## Beschreibung

Die Erfindung bezieht sich auf einen Fehlerstromschutzschalter, dessen von einem Summenstromwandler gewonnenes Auslösesignal einer Auslöseeinrichtung über eine Energiespeicherschaltung zugeführt wird, im einzelnen nach Gattungsbegriff von Patentanspruch 1. Ein Summenstromwandler weist Primärwindungen für zu schützende Leiter und zumindest eine Sekundarwicklung zur Abgabe des Auslösesignals auf.

Eine Energiespeicherschaltung bei Fehlerstromschutzschaltern lädt mit kleinen vom Summenstromwandler gewonnenen Auslösesignalen einen Speicher, bis ein zugeordnetes Auslöseventil den Speicher über eine Auslöseeinrichtung entlädt. Die Auslöseeinrichtung kann zum Entklinken eines Schaltschlosses und zum Öffnen von Schaltkontakten in zu schützenden Leitern bzw. angeschlossenen Verbrauchern führen. Derartige Fehlerstromschutzschalter sind in den verschiedenartigsten Ausführungen bekannt (DE-A-3 129 277, DE-A-2 540 815).

Bei Fehlerstromschutzschaltern strebt man heutzutage an, daß sie nicht nur auf Wechselfehlerströme, sondern auch auf Pulsströme sensitiv sind. Hierzu eignen sich Kernmaterialien mit flacher Kennlinie, sogenanntes F-Material (EP-B-0 084 814, FIG 2).

Der Erfindung liegt die Aufgabe zugrunde, einen Fehlerstromschutzschalter der eingangs geschilderten Art so weiterzuentwickeln, daß er gegen Fehlerströme mit glatten Gleichstromkomponenten weitgehend unempfindlich ist.

Die Lösung der geschilderten Aufgabe erfolgt nach der Erfindung durch einen Fehlerstromschutzschalter nach Patentanspruch 1.

Der Summenstromwandler besteht aus einem Kernmaterial, dessen relative Permeabilität, gemessen im Leerlauf mit 50 Hz Wechselspannung bei einer Scheitelfeldstarke Hs von 4 mA/cm, Permeabilität $\mu4$ genannt, und bei $+25°$ C der Beziehung folgt: $\mu4 \geq 130\ 000$. Die relative Permeabilität, $\mu r$, liegt bei einer Scheitelfeldstarke, Hs, zwischen 4 mA/cm und 40 mA/cm zwischen einem maximalen Wert $\mu rmax$ und einem minimalen Wert $\mu rmin$, die im Leerlauf gemessen der Beziehung folgen: $\mu rmax/\mu rmin \leq 1{,}2$ .

Ein Summenstromwandler mit derartigem Kernmaterial ergibt Fehlerstromschutzschalter, die bei Wechselfehlerströmen, pulsierenden Fehlerströmen und bei Fehlerströmen mit Gleichstromkomponenten auslösen und die gegen Überlagerung mit glatten Gleichfehlerströmen bis zur Auslösegrenze eines Gleichstromerfassungsteils unempfindlich sind, also in ihrer Auslösung nicht störend beeinträchtigt werden. Es soll hier dann von allstromverträglichen Fehlerstromschutzschaltern gesprochen werden.

Nach einer Weiterbildung gemäß Anspruch 2 wird ein besonderes F-Material erzielt. Das Verhältnis der statischen Differenzinduktion, $\Delta Bstat$, zwischen der maximalen Induktion, Bmax, und der statischen Remanenzinduktion, Brstat, zur dynamischen Differenzinduktion, $\Delta Bdyn$, gemessen mit doppelweggleichgerichtetem Wechselstrom -, bei einer Scheitelfeldstärke Hs von 40 mA/cm genügt hierbei der Beziehung: $\Delta Bstat/\Delta Bdyn \leq 1{,}1$ . Das Verhältnis der Induktion bei Wechselstrom, Bw, zur statischen Differenzinduktion mit einweggleichgerichtetem Wechselstrom, $\Delta Bstat$, folgt bei einer Scheitelfeldstarke Hs von 40 mA/cm der Beziehung: $Bw/\Delta Bstat \leq 1{,}2$ . Ein Fehlerstromschutzschalter, der mit derartigem Kernmaterial bestückt ist, ermöglicht eine verlustarme Erfassung von pulsierenden Gleichfehlerströmen und damit weitgehend übereinstimmende Auslösebereiche für Wechselfehlerströme und für pulsierende Fehlerströme.

Nach einer weiteren Weiterbildung gemäß Anspruch 3 ist der speichernde Kondensator einer Energiespeicherschaltung am Ausgang einer Gleichrichterschaltung angeordnet, wobei zur Eingangsseite der Gleichrichterschaltung eine Resonanzanpassung unter Einbeziehung der Sekundärwicklung des Summenstromwandlers auf die Frequenz besteht, die in der Sekundärwicklung von einem in der Primärwicklung des Summenstromwandlers fließenden pulsierenden Gleichstromfehlerstrom induziert wird. Weiter besteht zwischen der Permeabilität $\mu4$ bei einer Temperatur von $+25°$ C, also $\mu4 + 25$,

der Permeabilität $\mu4$ bei $-25°$ C, also $\mu4 - 25$,

und der Permeabilität $\mu4 + 85°$ C, also $\mu4 + 85$ folgende Beziehung:

$$0{,}85 \leq \mu4 + 25/\mu4 - 25 \leq 1{,}1 \text{ und}$$

$$0{,}85 \leq \mu4 + 25/\mu4 + 85 \leq 1{,}1.$$

Ein Fehlerstromschutzschalter nach Anspruch 3 nutzt die Resonanzanpassung zur Verstärkung des Auslösesignals und sichert ausreichende Temperaturkonstanz der Auslösewerte, die an sich bei Resonanzanpassung ohne die besonderen Maßnahmen eine starke Veränderung mit der Temperatur aufweisen würden.

Der Fehlerstromschutzschalter und in seinen verschiedenen Stufen der Weiterbildung ermöglicht es, zunehmend mit Summenstromwandlern kleineren Querschnitts und mit kleineren Windungszahlen auszukommen. So kann man Fehlerstromschutzschalter realisieren, die als Primärwindung lediglich mit einem durchgesteckten Leiter arbeiten und die wenige Windungen in der Sekundärwicklung aufweisen. Insbesondere kann die Gleichrichteranordnung mit einer Spannungsvervielfacherschaltung versehen sein, um das vom Summenstromwandler in seiner Sekundärwick-

EP 0 697 704 B1

lung gewonnene Auslösesignal weiter anzuheben.

Die Erfindung soll nun anhand von in der Zeichnung grob schematisch wiedergegebenen Ausführungsbeispielen näher erläutert werden:

In FIG 1 ist das Grundprinzip des Fehlerstromschutzschalters mit Energiespeicherschaltung wiedergegeben.
In FIG 2 ist ein Diagramm dargestellt, wobei auf der Abszisse die Feldstärke H und auf der Ordinate die magnetische Induktion B des Materials des Kerns eines Summenstromwandlers aufgetragen ist.
In FIG 3 ist ein Diagramm wiedergegeben, wobei auf der Abszisse die Scheitelfeldstärke Hs bzw. $\hat{H}$ und auf der Ordinate die relative Permeabilität µr abgetragen ist.

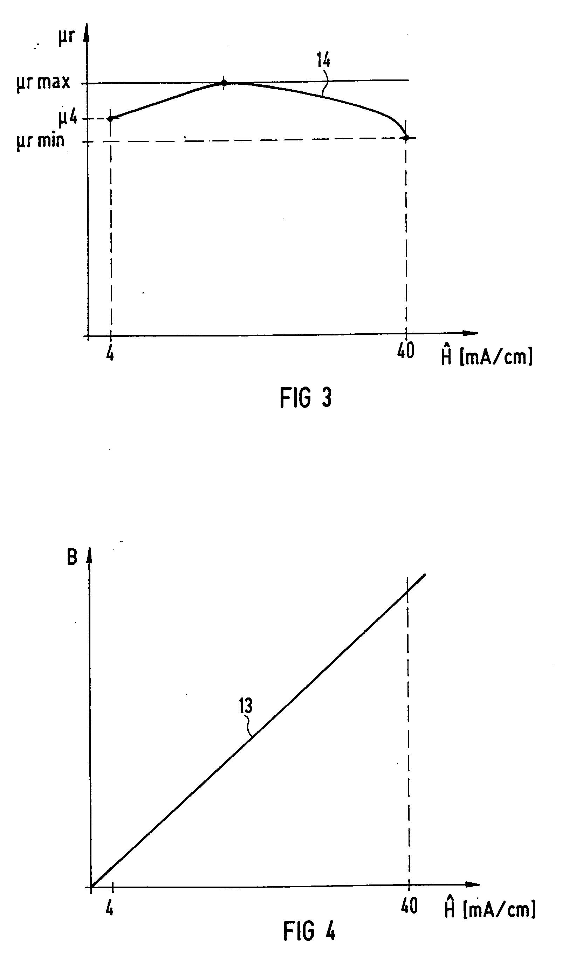

Im Diagramm nach FIG 4 ist auf der Abszisse die Scheitelfeldstärke Hs bzw. $\hat{H}$ und auf der Ordinate die magnetische Induktion B aufgetragen. Die wiedergegebene Gerade kann als Steigung der dynamischen B-H-Kennlinie verstanden werden, wonach die Permeabilität bei kleiner Wechselaussteuerung, also die reversible Permeabilität, annähernd der Steigung der dynamischen B-H-Kennlinie entspricht. Mit anderen Worten: bei überlagerter Gleichfeldstärke bis 40 mA/cm bleibt die reversible Permeabilität konstant.

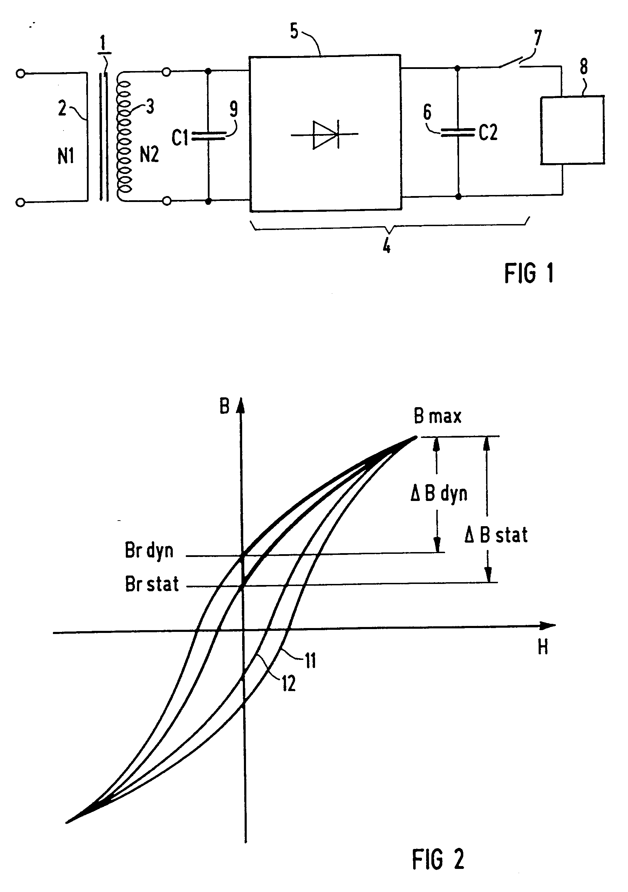

Der Fehlerstromschutzschalter nach FIG 1 arbeitet mit einem Summenstromwandler 1, beispielsweise ein Ringkern, durch den als Windung ein Primärleiter durchgesteckt ist und die Primärwindung 2 bzw. die Primärwicklung bildet. Die Sekundärwicklung 3 ist mit einer Energiespeicherschaltung 4 aus Gleichrichterschaltung 5 und Energiespeicherelement 6, im Ausführungsbeispiel Kondensator C2, und Schwellwertschalter 7, beispielsweise mit einer Zenerdiode als Referenzelement, versehen. Die Auslöseeinrichtung 8 kann mit einer Haltemagnetspule arbeiten. Ein Kondensator 9, C1, ermöglicht eine zumindest teilweise Resonanzanpassung an die Sekundärwicklung 3 des Summenstromwandlers, um das Auslösesignal zu verstärken. Über die Gleichrichterschaltung 5 gelangen Auslösesignale vom Summenstromwandler auf das Energiespeicherelement 6. Wenn der Schwellwert des Schwellwertschalters 7 überschritten wird, entlädt sich das Energiespeicherelement 6 über die Auslösewicklung 10 der Auslöseeinrichtung 8.

Bei einem Auslösewechselfehlerstrom von beispielsweise 22,5 mA bei einem Nennfehlerstrom $I_{\Delta n}$ = 30 mA und einer Primärwindungszahl N1 = 1 liegt die Feldstärkeaussteuerung bei typischen Eisenweglängen $I_{Fe}$ von 5 bis 7 cm mit ca 4 bis 6 mA/cm verhältnismäßig niedrig. Um bei derart geringen Aussteuerungen eine für die Auslöseeinrichtung 8 bzw. für eine Auslöseelektronik im Auslösekreis eine ausreichende Spannung von beispielsweise 5 Volt bei 22,5 mA zu erzielen, ist ein Kernmaterial mit einer relativen Permeabilität µ4 ≥ 130 000, bei +25° C, dienlich.

Bei einem Wandlerquerschnitt $A_{Fe}$ von 0,5 bis 0,7 cm$^2$ und einer Ladespannung des Energiespeicherkondensators C2 als Energiespeicherelement 6 von beispielsweise 5 Volt ermöglicht eine Spannungsverdopplerschaltung als Gleichrichter 5 niedrige Sekundärwindungszahlen N2 der Sekundärwicklung 3 in einer Größenordnung von 1000 bis 2000. Die niedrigeren Windungszahlen dieses Bereichs werden erreicht mit zunehmender Resonanzanpassung des Kondensators 9 bzw. C1.

Ohne Resonanzanpassung und bei sinusförmigem Fehlerstrom ergibt sich bei Leerlauf im eingeschwungenen Zustand eine induzierte Spannung $u_{ind}$:

$$\hat{u}_{ind} = N2 \times d\emptyset/dt;$$
$$\hat{u}_{ind} = N2 \times 2\pi f \times \mu o \times \mu r \times \hat{H} \times A_{Fe}; \text{ bei } \hat{H} = \Delta \times N1/l_{Fe}$$
$$\text{und } \mu_O = 4\pi \times 10^{-7} \text{ Vs/Am, somit}$$
$$= 2000 \times 6,28 \times 50s^{-1} \times 12,6 \times 10^{-7} \text{Vs/Am} \times 130000 \times 4mA/10^{-}$$
$$m \times 0,6 \times 10^{-4} cm2$$
$$= 2,5V.$$

Bei einer Spannungsverdopplerschaltung können am Energiespeicherkondensator 6 dann 5 Volt erzielt werden.

Durch ein Kernmaterial, bei dem µrmax/µrmin ≤ 1,2 ist, und zwar in einem Bereich der Feldstärke, deren Scheitelfeldstärke zwischen 4 mA/cm und 40 mA/cm liegt, erzielt man in Verbindung mit den weiteren Merkmalen nach Anspruch 1 ein ausreichendes Auslösesignal bei verhältnismäßig wenigen Sekundärwindungen. Durch eine verhältnismäßig konstante relative Permeabilität wird eine gute Allstromverträglichkeit gewährleistet.

Aus dem Diagramm nach FIG 2 sind an einer im Leerlauf gemessenen Magnetisierungskurve eines Summenstromwandlers Materialkenndaten veranschaulicht, die dem Fehlerstromschutzschalter zugrunde liegen. Die schmalere Kurve erzielt man bei Erregung des Kernmaterials im Leerlauf bei Wechselspannung. Auf der breiteren Kurve, die höheren Magnetisierungsverlusten entspricht, liegt man mit ΔBdyn bei Doppelweggleichrichtung. Bei ein-

3

weggleichgerichteter Wechselspannung für die Erregung des Kernmaterials kann man an der inneren Kurve ΔBstat als Ergebnis abnehmen. Man bezeichnet die äußere Hystereseschleife auch als dynamische Hystereseschleife 11 und die innere Hystereseschleife als statische Hystereseschleife 12. Durch Kerndaten nach Anspruch 2 wird ein besonderes, verlustarmes F-Material ausgewählt, das sich zur Erfassung von pulsierenden Gleichfehlerströmen besonders eignet. Hiernach ist ΔBstat/ΔBdyn ≤ 1,1 bei einer Scheitelfeldstärke Hs von 40 mA/cm und Bw/ΔBstat ≤ 1,2 bei HS 40 mA/cm.

Durch an sich erwünschte Resonanzanpassung, um höhere Auslösesignale bei kleinen Querschnitten des Wandlermaterials und möglichst nur einem Durchsteckleiter für die Primärwicklung sowie niedrigen Sekundärwindungszahlen zu erzielen, weist die Permeabilität zunehmenden Temperaturgang auf. Um in einem weiten Temperaturbereich von etwa -25° C bis +85° C die Auslöseeigenschaften des Fehlerstromschutzschalters weitgehend konstant zu halten, sollten die Kerndaten den Vorgaben nach Anspruch 3 genügen. Hierbei sollen folgende Beziehungen erfüllt sein:

$$0,85 \le \mu4{+}25/\mu4{-}25 \le 1,1 \text{ und}$$

$$0,85 \le \mu4{+}25/\mu4{+}85 \le 1,1.$$

Die Verhältnisse sind in FIG 3 grob schematisch veranschaulicht. Hiernach ist für eine Scheitelfeldstärke von 4 bis 40 mA/cm der Verlauf der relativen Permeabilität μr zwischen einem μrmax und einem μrmin vorgegeben, wobei μrmax/μrmin ≤ 1,2 ist. In Verbindung mit der Forderung μ4 ≥ 130 000 ist dadurch der Verlauf der relativen Permeabilität eines geeigneten Kernmaterials vorgegeben.

Gute Konstanz der relativen Permeabilität wird umso wesentlicher, je stärker eine Resonanzanpassung des Kondensators 9 nach FIG 1 an die Sekundärwicklung 3 genutzt wird.

Diese Verhältnisse sind durch die Kerndaten nach Anspruch 3 berücksichtigt.

Im Diagramm nach FIG 4 sind auf der Abszisse Scheitelfeldstärken zwischen 4 und 40 mA/cm und auf der Ordinate die magnetische Induktion aufgetragen. Die im Diagrammfeld eingetragene Kennlinie 13 mit Geradenverlauf veranschaulicht, daß bei vernachlässigten Wirbelstromverlusten die reversible Permeabilität als Permeabilität bei kleiner Wechselaussteuerung annähernd der Steigung der dynamischen B-H-Kennlinie entspricht. Mit anderen Worten: Bei einer überlagerten Gleichfeldstärke von 40 mA/cm bleibt die reversible Permeabilität konstant.

Einem Fehlerstromschutzschalter mit den geschilderten Kerndaten kann ein auf Gleichstromfehlerströme spezialisierter Schutzschalter nachgeschaltet werden, beispielsweise ein entsprechender DI-Schutzschalter, ohne daß der Fehlerstromschutzschalter in seinem Auslöseverhalten durch glatte Gleichstromfehlerströme unzulässig beeinträchtigt würde. Der Fehlerstromschutzschalter bleibt also auch bei steigenden Gleichstromfehlerstromanteilen arbeitstüchtig, und zwar so lange, bis der auf Gleichstromfehlerströme spezialisierte Schutzschalter die Abschaltung übernehmen kann. Bei konventionellen Fehlerstromschutzschaltern führt ein zunehmender Gleichstromanteil dazu, daß der Fehlerstromschutzschalter nicht mehr zuverlässig auslösen kann, so daß man bisher dann die Abschaltung durch einen nachgeordneten universellen elektronischen Schutzschalter übernehmen lassen mußte. Derartige Schutzschalter lassen sich jedoch nicht netzspannungsunabhängig realisieren. Bei einem netzspannungsunabhängigen Fehlerstromschutzschalter mit den geschilderten Kerndaten kann man daher besonders vorteilhafte Kombinationen von Schutzschaltern aufbauen.

Hinsichtlich eines Geräteabgleichs kann es in der Praxis sinnvoll sein, die magnetische Induktion bei einer Feldstärke von 4 mA/cm, B4, und die Induktion bei einer Feldstärke von 40 mA/cm, B40, so zu wählen, daß die Obergrenzen knapp unter den Untergrenzen liegen, so daß also die Beziehung erfüllt ist Bmax ≤ 1,25 Bmin . Der Erfüllung dieser Forderung können die wirtschaftlichen Möglichkeiten Grenzen setzen.

**Patentansprüche**

1. Fehlerstromschutzschalter, dessen von einem Summenstromwandler (1) gewonnenes Auslösesignal einer Auslöseeinrichtung (8) über eine Energiespeicherschaltung (4) zugeführt wird, wobei der Summenstromwandler (1) Primärwindungen (2) für zu schützende Leiter und zumindest eine Sekundärwicklung (3) zur Abgabe des Auslösesignals aufweist,
   **dadurch gekennzeichnet**,
   daß der Summenstromwandler (1) aus einem Kernmaterial besteht,

   - dessen relative Permeabilität μr, gemessen im Leerlauf mit 50 Hz Wechselspannung bei einer Scheitelfeldstärke Hs von 4 mA/cm, Permeabilität μ4 genannt, und bei +25° C der Beziehung folgt

$$\mu4 \ge 130\ 000$$

- und dessen relative Permeabilität µr bei einer Scheitelfeldstärke, Hs, zwischen 4 mA/cm und 40 mA/cm zwischen einem maximalen Wert, µrmax, und einem minimalen Wert, µrmin, liegt, die im Leerlauf gemessen der Beziehung genügen:

$$\mu rmax/\mu rmin \leq 1,2.$$

2. Fehlerstromschutzschalter nach Anspruch 1,
   **dadurch gekennzeichnet**,

   - daß beim Kernmaterial das Verhältnis der statischen Differenzinduktion, ∆Bstat, zwischen der maximalen Induktion, Bmax, und der statischen Remanenzinduktion, Brstat, zur dynamischen Differenzinduktion, ∆Bdyn, gemessen mit doppelweggleichgerichtetem Wechselstrom - , bei einer Scheitelfeldstärke Hs von 40 mA/cm der Beziehung genügt: ∆Bstat/∆Bdyn ≤ 1,1 ,
   - und daß das Verhältnis der Induktion bei Wechselstrom, Bw, zur statischen Differenzinduktion, gemessen mit einweggleichgerichtetem Wechselstrom, ∆Bstat, bei einer Scheitelfeldstarke Hs von 40 mA/cm der Beziehung folgt: Bw/∆Bstat ≤ 1,2 .

3. Fehlerstromschutzschalter nach Anspruch 1 oder 2,
   **dadurch gekennzeichnet**,

   - daß bei einer Energiespeicherschaltung (4), deren speichernder Kondendensator am Ausgang einer Gleichrichterschaltung (5) angeordnet ist, auf deren Eingangsseite der Gleichrichterschaltung eine Resonanzanpassung unter Einbeziehung der Sekundärwicklung (3) des Summenstromwandlers (1) auf die Frequenz besteht, die in der Sekundärwicklung von einem in der Primärwicklung des Summenstromwandlers fließenden pulsierenden Gleichstromfehlerstrom induziert wird,
   - und daß zwischen der Permeabilität µ4 bei einer Temperatur von +25° C, also µ4 + 25, der Permeabilität µ4 bei -25° C, also µ4 - 25, und der Permeabilität µ4 bei +85° C, also µ4 + 85 die Beziehung besteht

$$0,85 \leq \mu 4 + 25/\mu 4 - 25 \leq 1,1 \text{ und}$$

$$0,85 \leq \mu 4 + 25/\mu 4 + 85 \leq 1,1.$$

**Claims**

1. Fault-current-operated circuit-breaker, the tripping signal of which, obtained from a summation-current transformer (1), is supplied to a tripping device (8) via an energy-storage circuit (4), the summation-current transformer (1) exhibiting primary turns (2) for conductors to be protected and at least one secondary winding (3) for the emission of the tripping signal,
   characterised in that
   the summation-current transformer (1) consists of a core material,

   - the relative permeability µr of which, measured in no-load operation with 50 Hz a.c. voltage at a peak field strength Hs of 4 mA/cm, called permeability µ4, and at +25° C conforms to the following relationship:

$$\mu 4 \geq 130,000$$

   - and the relative permeability µr of which lies in the case of a peak field strength, Hs, between 4 mA/cm and 40 mA/cm between a maximum value, µrmax, and a minimum value, µrmin, which, measured in no-load operation, satisfy the following relationship:

$$\mu rmax/\mu rmin \leq 1.2.$$

2. Fault-current-operated circuit-breaker according to Claim 1,
   characterised in that

   - in the case of the core material the ratio of the static difference induction, ∆Bstat, between the maximum induc-

tion, Bmax, and the static residual induction, Brstat, to the dynamic difference induction, $\Delta$Bdyn, measured with full-wave-rectified alternating current at a peak field strength Hs of 40 mA/cm satisfies the following relationship:

$$\Delta Bstat/\Delta Bdyn \leq 1.1,$$

- and in that the ratio of the induction in the case of alternating current, Bw, to the static difference induction, measured with half-wave-rectified alternating current, $\Delta$Bstat, at a peak field strength Hs of 40 mA/cm conforms to the following relationship:

$$Bw/\Delta Bstat \leq 1.2.$$

3. Fault-current-operated circuit-breaker according to Claim 1 or 2, characterised in that

- in the case of an energy-storage circuit (4) , the storing capacitor of which is arranged at the output of a rectifier circuit (5), on the input side of which of the rectifier circuit there is a resonance matching, including the secondary winding (3) of the summation-current transformer (1), to the frequency induced in the secondary winding by a pulsating d.c. fault current flowing in the primary winding of the summation-current transformer,
- and in that between the permeability $\mu4$ at a temperature of +25° C, that is to say $\mu4 + 25$, the permeability $\mu4$ at -25° C, that is to say $\mu4 - 25$, and the permeability $\mu4$ at + 85° C, that is to say $\mu4 + 85$, the following relationship exists:

$$0.85 \leq \mu4 + 25/\mu4 - 25 \leq 1.1 \text{ and}$$

$$0.85 \leq \mu4 + 25/\mu A + 85 \leq 1.1.$$

## Revendications

1. Disjoncteur de protection à déclenchement par courant de défaut dont le signal de déclenchement, obtenu par un transformateur (1) de courant totalisateur, est envoyé à un dispositif (8) de déclenchement par l'intermédiaire d'un circuit (4) de stockage d'énergie, le transformateur (1) de courant totalisateur présentant des spires (2) primaires pour des conducteurs à protéger et au moins un enroulement (3) secondaire pour l'émission du signal de déclenchement,
caractérisé en ce que
le transformateur (1) de courant totalisateur se compose d'un matériau de noyau

- dont la perméabilité $\mu r$ relative, mesurée en circuit ouvert avec une tension alternative de 50 Hz, pour une intensité de champ de crête Hs de 4 mA/cm, est nommée perméabilité $\mu4$ et suit à +25 °C la relation :

$$\mu4 \geq 130\ 000$$

- et dont la perméabilité $\mu r$ relative, avec une intensité de champ de crête, Hs, comprise entre 4 mA/cm et 40 mA/cm, est comprise entre une valeur $\mu rmax$ maximale et une valeur $\mu rmin$ minimale qui, mesurées en circuit ouvert, satisfont la relation :

$$\mu rmax/\mu rmin \leq 1,2.$$

2. Disjoncteur de protection à déclenchement par courant de défaut selon la revendication 1, caractérisé en ce que

- pour le matériau de noyau, le rapport de l'induction différentielle statique, $\Delta$Bstat, entre l'induction maximale, Bmax, et l'induction résiduelle statique, Brstat, à l'induction différentielle dynamique, $\Delta$Bdyn, mesurée avec un courant redressé pleine-onde -, dans le cas d'une intensité de champ de crête Hs de 40 mA/cm, satisfait à la relation : $\Delta Bstat/\Delta Bdyn \leq 1,1$ ,
- et en ce que le rapport de l'induction dans le cas d'un courant alternatif, Bw, à l'induction différentielle statique, mesurée avec du courant redressé demionde, $\Delta$Bstat, suit, dans le cas d'une intensité de champ de crête Hs de 40 mA/cm, la relation : $Bw/\Delta Bstat \leq 1,2$ .

3. Disjoncteur de protection à déclenchement par courant de défaut selon la revendication 1 ou 2, caractérisé en ce que,

- avec un circuit (4) de stockage d'énergie dont le condensateur de stockage est disposé à la sortie d'un circuit (5) redresseur, il existe du circuit redresseur côté de l'entrée duquel existe une adaptation de résonance à la fréquence qui est induite dans l'enroulement secondaire par un courant de défaut continu ondulé qui passe dans l'enroulement primaire du transformateur de courant totalisateur, avec intégration de l'enroulement (3) secondaire du transformateur (1) de courant totalisateur
- et en ce qu'il existe entre la perméabilité $\mu 4$ à une température de +25 °C, soit $\mu 4$ +25, la perméabilité $\mu 4$ à -25 °C, soit $\mu 4$ -25, et la perméabilité $\mu 4$ à 85 °C, soit $\mu 4$ +85, la relation

$$0,85 \leq \mu 4 +25/\mu 4 -25 \leq 1,1 \text{ et}$$

$$0,85 \leq \mu 4 +25/\mu 4 +85 \leq 1,1.$$

FIG 1

FIG 2

μr

μr max

μ4

μr min

14

4                    40          Ĥ [mA/cm]

FIG 3

B

13

4                    40          Ĥ [mA/cm]

FIG 4